# EUROPEAN PATENT APPLICATION

(11) **EP 4 465 698 A1**
(43) Date of publication of application: **20.11.2024**
(21) Application number: 23740026.2
(22) Date of filing: 10.01.2023
(51) Int. Cl.: H04W 36/32, H04W 36/00

(54) **CELL RESELECTION METHOD AND APPARATUS, DEVICE, SYSTEM, AND STORAGE MEDIUM**

(30) Priority: 14.01.2022 CN 202210045034
(71) Applicant: VIVO MOBILE COMMUNICATION CO., LTD., Dongguan, Guangdong 523863 (CN)
(72) Inventor: LIU, Jinhua, Dongguan, Guangdong 523863 (CN)
(74) Representative: Petraz, Gilberto Luigi
(86) International application number: PCT/CN2023/071653
(87) International publication number: WO 2023/134684

(57) **Abstract**

This application discloses a cell reselection method and apparatus, a device, a system, and a storage medium, and relates to the field of communication technologies. The cell reselection method in embodiments of this application includes: performing, by a UE, a target action in a case that the UE is in a vehicle state, and a cell in which the UE is located is vehicle mobile cell. The target action is any one of the following: determining a priority of a carrier frequency corresponding to the vehicle mobile cell as a target priority, and performing inter-frequency cell reselection according to the target priority; performing cell reselection based on a vehicle state dedicated reselection offset; or performing cell reselection based on a vehicle state dedicated reselection hysteresis time.

## Description

### CROSS-REFERENCE TO RELATED APPLICATION

This application claims the priority of Chinese Patent Application No. 202210045034.7 filed in China on January 14, 2022, the entire content of which is hereby incorporated by reference.

### TECHNICAL FIELD

This application relates to the field of communication technologies, and specifically, to a cell reselection method and apparatus, a device, a system, and a storage medium.

### BACKGROUND

When a user equipment (User Equipment, UE) camps on a vehicle mobile cell (a cell provided by a vehicle mobile integrated access backhaul (Integrated Access Backhaul, IAB) node) in a vehicle cabin, a neighboring cell (a cell provided by a fixed base station) of the UE changes as the vehicle moves, and the vehicle UE performs cell reselection to reselect a neighboring fixed cell (provided by a neighboring base station) with a higher priority or better pilot signal quality. When the vehicle moves away from the fixed cell, the vehicle UE reselects back the mobile cell. When the vehicle moves fast or a cell coverage area is small, the vehicle UE frequently performs cell reselection as the vehicle moves, which results in unnecessary cell reselection by the UE. Therefore, the vehicle UE reselects a fixed cell accompanied with the mobile cell, and when the vehicle moves away, quality of the fixed cell deteriorates. If the UE has not established a connection at this time, the UE needs to reselect back the mobile cell. Frequent reselection consumes power of the UE due to frequent measurement. If the UE has established a wireless connection with the fixed cell, the UE needs to hand over back to a fixed cell through a handover procedure. This process has a risk of a handover failure, and in a case of a successful handover, an output transmission interruption may be caused by the handover. Therefore, frequent cell reselection results in poor quality of service of vehicle UEs.

### SUMMARY

Embodiments of this application provide a cell reselection method and apparatus, a device, a system, and a storage medium, which can resolve the problem of poor quality of service of the vehicle UE resulted from unnecessary cell reselection by the UE because the vehicle UE frequently performs cell reselection as the vehicle moves.

According to a first aspect, a cell reselection method is provided. The method includes: performing, by a UE, a target action in a case that the UE is in a vehicle state, and a cell in which the UE is located is vehicle mobile cell. The target action is any one of the following: determining a priority of a carrier frequency corresponding to the vehicle mobile cell as a target priority, and performing inter-frequency cell reselection according to the target priority; performing cell reselection based on a vehicle state dedicated reselection offset; or performing cell reselection based on a vehicle state dedicated reselection hysteresis time.

According to a second aspect, a cell reselection apparatus is provided. The apparatus includes: an obtaining module and an execution module. The obtaining module is configured to obtain a target action. The execution module is configured to perform the target action in a case that a UE is in a vehicle state, and a cell in which the UE is located is a vehicle mobile cell. The target action is any one of the following: determining a priority of a carrier frequency corresponding to the vehicle mobile cell as a target priority, and performing inter-frequency cell reselection according to the target priority; performing cell reselection based on a vehicle state dedicated reselection offset; or performing cell reselection based on a vehicle state dedicated reselection hysteresis time.

According to a third aspect, a cell reselection method is provided. The method includes: sending, by a network side device, configuration information to a UE, where the configuration information is used for instructing the UE in a vehicle state to perform a target action. The UE performs the target action in a case that the UE is in the vehicle state, and a cell in which the UE is located is a vehicle mobile cell, and the target action is any one of the following: determining a priority of a carrier frequency corresponding to the vehicle mobile cell as a target priority, and performing inter-frequency cell reselection according to the target priority; performing cell reselection based on a vehicle state dedicated reselection offset; or performing cell reselection based on a vehicle state dedicated reselection hysteresis time.

According to a fourth aspect, a cell reselection apparatus is provided. The apparatus includes: a sending module. The sending module is configured to send configuration information to a UE, where the configuration information is used for instructing the UE in a vehicle state to perform a target action. The UE performs the target action in a case that the UE is in the vehicle state, and a cell in which the UE is located is a vehicle mobile cell, and the target action is any one of the following: determining a priority of a carrier frequency corresponding to the vehicle mobile cell as a target priority, and performing inter-frequency cell reselection according to the target priority; performing cell reselection based on a vehicle state dedicated reselection offset; or performing cell reselection based on a vehicle state dedicated reselection hysteresis time.

According to a fifth aspect, a UE is provided. The UE includes a processor and a memory. The memory has a program or an instruction stored therein and executable on the processor. When the program or the instruction is executed by the processor, the steps of the method according to the first aspect are implemented.

According to a sixth aspect, a UE is provided. The UE includes a processor and a communication interface. The processor is configured to perform a target action in a case that the UE is in a vehicle state, and a cell in which the UE is located is a vehicle mobile cell. The target action is any one of the following: determining a priority of a carrier frequency corresponding to the vehicle mobile cell as a target priority, and performing inter-frequency cell reselection according to the target priority; performing cell reselection based on a vehicle state dedicated reselection offset; or performing cell reselection based on a vehicle state dedicated reselection hysteresis time.

According to a seventh aspect, a network side device is provided. The network side device includes a processor and a memory. The memory has a program or an instruction stored therein and executable on the processor. When the program or the instruction is executed by the processor, the steps of the method according to the third aspect are implemented.

According to an eighth aspect, a network side device is provided. The network side device includes a processor and a communication interface. The communication interface is configured to send configuration information to a UE, where the configuration information is used for instructing the UE in a vehicle state to perform a target action. The UE performs the target action in a case that the UE is in the vehicle state, and a cell in which the UE is located is a vehicle mobile cell, and the target action is any one of the following: determining a priority of a carrier frequency corresponding to the vehicle mobile cell as a target priority, and performing inter-frequency cell reselection according to the target priority; performing cell reselection based on a vehicle state dedicated reselection offset; or performing cell reselection based on a vehicle state dedicated reselection hysteresis time.

According to a ninth aspect, a communication system is provided. The communication system includes: a UE and a network side device. The UE may be configured to perform the steps of the cell reselection method according to the first aspect, and the network side device may be configured to perform the steps of the cell reselection method according to the third aspect.

According to a tenth aspect, a readable storage medium is provided. The readable storage medium has a program or an instruction stored therein. When the program or the instruction is executed by a processor, the steps of the method according to the first aspect are implemented, or the steps of the method according to the third aspect are implemented.

According to an eleventh aspect, a chip is provided. The chip includes a processor and a communication interface. The communication interface is coupled to the processor. The processor is configured to execute a program or an instruction, to implement the method according to the first aspect, or implement the method according to the third aspect.

According to a twelfth aspect, a computer program/program product is provided. The computer program/program product is stored in a storage medium. The computer program/program product is executed by at least one processor, to implement the steps of the cell reselection method according to the first aspect, or implement the steps of the cell reselection method according to the third aspect.

In the embodiments of this application, in a case that the UE is in the vehicle state, and the cell in which the UE is located is the vehicle mobile cell, the UE may perform any one of the following: determining a priority of a carrier frequency corresponding to the vehicle mobile cell as a target priority, and performing inter-frequency cell reselection according to the target priority; performing cell reselection based on a vehicle state dedicated reselection offset; or performing cell reselection based on a vehicle state dedicated reselection hysteresis time. In this solution, when the UE camps on the vehicle mobile cell, the vehicle UE may adjust the priority of the frequency of the vehicle mobile cell to the target priority, or perform cell reselection based on the vehicle state dedicated reselection offset, or perform cell reselection based on the vehicle state dedicated reselection hysteresis time, instead of directly performing cell reselection frequently as the vehicle moves. This reduces a probability that the vehicle UE camping on the vehicle mobile cell reselects a fixed cell, avoids unnecessary cell reselection of the vehicle UE, and improves quality of service of the UE.

### BRIEF DESCRIPTION OF THE DRAWINGS

FIG. 1 is a schematic architectural diagram of a wireless communication system according to an embodiment of this application;
FIG. 2 is a schematic architectural diagram of an IAB system according to an embodiment of this application;
FIG. 3 is a schematic diagram of a CU-DU structure of an IAB system according to an embodiment of this application;
FIG. 4 is a schematic diagram of an example in which a mobile IAB node provides a wireless relay service for train passengers according to an embodiment of this application;
FIG. 5 is a schematic diagram 1 of a cell reselection method according to an embodiment of this application;
FIG. 6 is a schematic diagram 2 of a cell reselection method according to an embodiment of this application;
FIG. 7 is a schematic structural diagram 1 of a cell reselection apparatus according to an embodiment of this application;
FIG. 8 is a schematic structural diagram 2 of a cell reselection apparatus according to an embodiment of this application;
FIG. 9 is a schematic structural diagram of hardware of a communication device according to an embodiment of this application;
FIG. 10 is a schematic structural diagram of hardware of a UE according to an embodiment of this application;
FIG. 11 is a schematic structural diagram 1 of hardware of a network side device according to an embodiment of this application; and
FIG. 12 is a schematic structural diagram 2 of hardware of a network side device according to an embodiment of this application.

### DETAILED DESCRIPTION

The following clearly describes the technical solutions in embodiments of this application with reference to the accompanying drawings in the embodiments of this application. Apparently, the described embodiments are some of the embodiments of this application rather than all of the embodiments. All other embodiments obtained by a person of ordinary skill in the art based on the embodiments of this application shall fall within the protection scope of this application.

Terms such as "first" and "second" in the specification of this application and the claims are used to distinguish between similar objects, but are unnecessarily used to describe a specific sequence or order. It may be understood that the terms used in such a way are interchangeable in proper circumstances, so that the embodiments of this application described herein can be implemented in other sequences than the sequence illustrated or described herein. The objects distinguished by "first" and "second" are usually of the same type, and the number of objects is not limited. For example, the number of first objects may be one or more than one. In addition, "and/or" in the specification and the claims represents at least one of the connected objects, and character "/" generally represents an "or" relationship between the connected objects.

It should be noted that the technologies described in the embodiments of this application are not limited to a Long Term Evolution (Long Term Evolution, LTE)/LTE-advanced (LTE-Advanced, LTE-A) system, and may further be applied to other wireless communication systems such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), Single-carrier Frequency Division Multiple Access (Single-carrier Frequency Division Multiple Access, SC-FDMA), and other systems. Terms "system" and "network" are usually used interchangeably in the embodiments of this application. The technology described may be applied to the systems and radio technologies mentioned above, or may be applied to other systems and radio technologies. The following description describes a New Radio (New Radio, NR) system for a purpose of example, and NR terms used in most of the description below, but the technologies are also applicable to applications other than NR system applications, such as a 6th generation (6^{th} Generation, 6G) communication system.

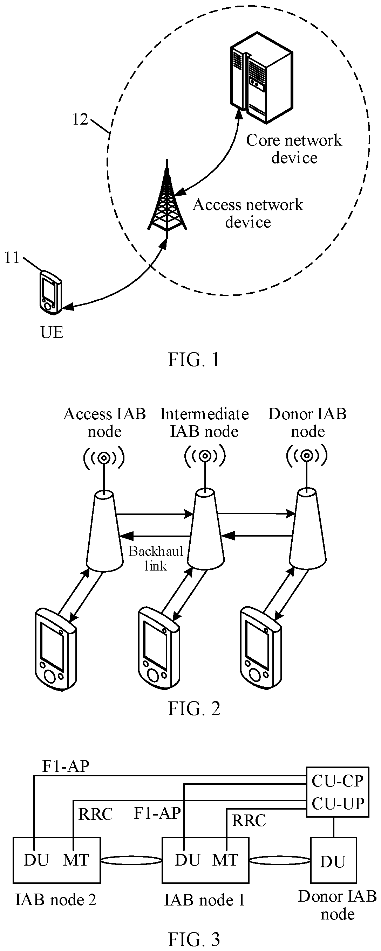

FIG. 1 is a block diagram of a wireless communication system to which the embodiments of this application are applicable. The wireless communication system includes a terminal 11 and a network side device 12. The terminal 11 may be a terminal side device such as a mobile phone, a Tablet Personal Computer (Tablet Personal Computer), a Laptop Computer (Laptop Computer) or a notebook computer, a Personal Digital Assistant (Personal Digital Assistant, PDA), a palmtop computer, a netbook computer, an Ultra-Mobile Personal Computer (ultra-mobile personal computer, UMPC), a Mobile Internet Device (Mobile Internet Device, MID), an augmented reality (augmented reality, AR)/virtual reality (virtual reality, VR) device, a robot, a Wearable Device (Wearable Device), a vehicle user equipment (VUE), a pedestrian user equipment (PUE), a smart household device (a household device with a wireless communication function, such as a refrigerator, a television, a washing machine, or furniture), a game console, a personal computer (personal computer, PC), a teller machine, or a self-service machine. The wearable device includes: a smart watch, a smart bracelet, smart earphones, smart glasses, smart jewelry (a smart bangle, a smart wrist chain, a smart ring, a smart necklace, a smart anklet, a smart ankle chain, and the like), a smart wristband, smart clothes, and the like. It should be noted that a specific type of the terminal 11 is not limited in this embodiment of this application. The network side device 12 may include an access network device or a core network device. The access network device 12 may also be referred to as a radio access network device, a Radio Access Network (Radio Access Network, RAN), a radio access network function, or a radio access network unit. The access network device 12 may include a base station, a WLAN access point, a Wi-Fi node, or the like. The base station may be referred to as a NodeB, an evolved NodeB (eNB), an access point, a Base Transceiver Station (Base Transceiver Station, BTS), a radio base station, a radio transceiver, a Basic Service Set (Basic Service Set, BSS), an Extended Service Set (Extended Service Set, ESS), a home NodeB, a home evolved NodeB, a Transmitting Receiving Point (Transmitting Receiving Point, TRP), or another suitable term in the art. As long as the same technical effect is achieved, the base station is not limited to a specific technical term. It should be noted that, a base station in an NR system is only used as an example in the embodiments of this application for description, and a specific type of the base station is not limited. The core network device may include, but is not limited to, at least one of the following: a core network node, a core network function, a Mobility Management Entity (Mobility Management Entity, MME), an Access and Mobility Management Function (Access and Mobility Management Function, AMF), a Session Management Function (Session Management Function, SMF), a User Plane Function (User Plane Function, UPF), a Policy Control Function (Policy Control Function, PCF), a Policy and Charging Rules Function (Policy and Charging Rules Function, PCRF), an Edge Application Server Discovery Function (Edge Application Server Discovery Function, EASDF), Unified Data Management (Unified Data Management, UDM), Unified Data Repository (Unified Data Repository, UDR), a Home Subscriber Server (Home Subscriber Server, HSS), Centralized Network Configuration (Centralized network configuration, CNC), a Network Repository Function (Network Repository Function, NRF), a Network Exposure Function (Network Exposure Function, NEF), a Local NEF (Local NEF, or L-NEF), a Binding Support Function (Binding Support Function, BSF), an Application Function (Application Function, AF), and the like. It should be noted that a core network device in the NR system is only used as an example for description in the embodiments of this application, and a specific type of the core network device is not limited.

Some concepts and/or terms involved in a cell reselection method and apparatus, a communication device, a system, and a storage medium provided in the embodiments of this application are explained below.

### 1. IAB system

FIG. 2 is a schematic diagram of an IAB system. One IAB node includes a Distributed Unit (Distributed Unit, DU) function part and a Mobile Terminal (Mobile Termination, MT) function part. Depending on the MT, one access point (namely, IAB node) may find one parent access point (parent IAB node), and establish a wireless connection with a DU of the parent access point. The wireless connection is referred to as a wireless backhaul link (backhaul link). After a complete backhaul link is established by the IAB node, the IAB node enables a DU function of the IAB node. The DU provides a cell service, namely, the DU can provide an access service for a UE. One self-backhaul loop includes a donor (donor) IAB node (or referred to as an IAB donor). The donor IAB node has a wired transmission network to which the donor IAB node is directly connected.

FIG. 3 is a diagram of a CU-DU structure in an IAB system. In one self-backhaul loop, DUs of all IAB nodes are connected to one Centralized Unit (Centralized Unit, CU) node, which configures the DUs through F1-Application Protocol (F1-Application Protocol, F1-AP) signaling. The CU configures the MT through Radio Resource Control (Radio Resource Control, RRC) signaling. The donor IAB node does not have the MT function part.

The IAB system is introduced to resolve a problem of inadequate deployment of a wired transmission network during dense deployment of access points. That is, when there is no wired transmission network, the access points may depend on wireless backhaul.

### 2. Mobile IAB system (mobile IAB system)

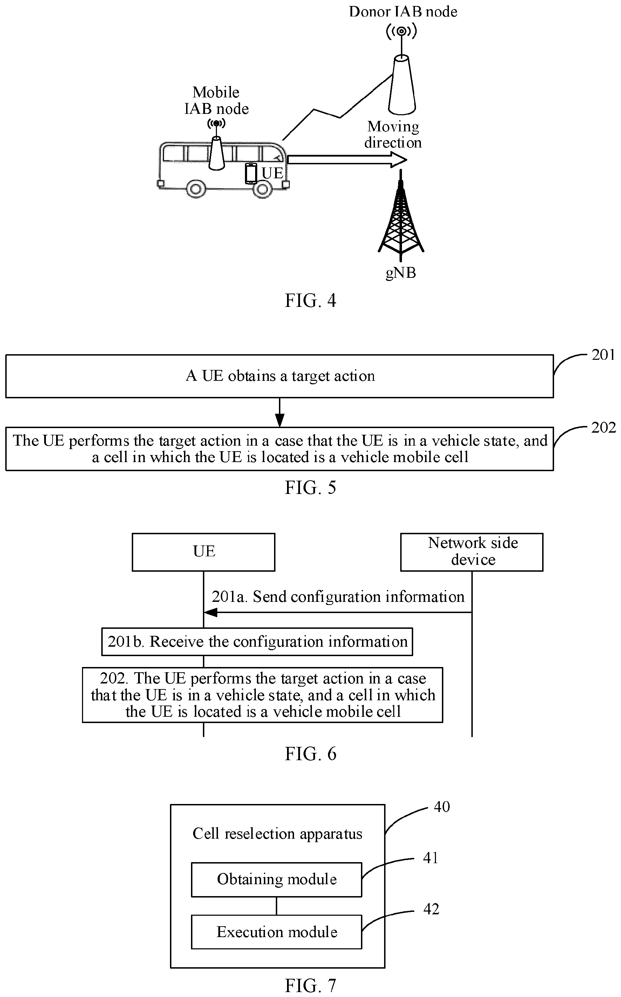

With the development of modern mobile communication technology and transportation technology, demands for communication during transportation becomes increasingly strong. For example, people hope to be able to work, watch videos, or play games through the Internet while riding high-speed transportation. To meet such demands, a mobile Integrated Access Backhaul (Integrated Access Backhaul, IAB) technology has been developed. The mobile IAB node is a movable self-backhaul relay base station. The mobile IAB node is mounted on vehicles (such as trains, buses, or ships), to meet instant messaging demands for passengers. The mobile IAB node may be used to provide a wireless communication service for passengers. FIG. 4 shows an example in which a mobile IAB node provides a wireless relay service for train passengers. With high power and adequate antenna performance, the IAB node can provide the passengers with large relay bandwidth. In addition, a cell provided by the mobile IAB node moves together with the passengers, and UEs of the passengers enjoy adequate air interface channels, and do not need to undergo frequent cell handovers, so that rates of the UEs of the passengers are greatly improved, and service interruption caused by the frequent cell handovers is avoided.

### 3. Cell selection principle

The cell selection principles are Srxlev>0 and Squal>0

```
Srxlev=Qrxlevmeas-(Qrxlevmin+Qrxlevminoffset)-Pcompensation-Qoffsettemp
Squal=Qqualmeas-(Qqualmin+Qqualminoffset)-Qoffsettemp
```

The above S principles are respectively equivalent to:

```
Qrxlevmeas>=(Qrxlevmin+Qrxlevminoffset)+Pcompensation+Qoffsettemp
Qqualmeas>=(Qqualmin+Qqualminoffset)+Qoffsettemp
```

The meanings of the above parameters are as follows:
Srxlev: a cell selection pilot signal received level (dB).
Qrxlevmeas: a received power measurement value (such as RSRP) of a pilot signal of a cell.
Qrxlevmin: a required minimum received power level (dBm).
Qrxlevminoffset: an offset relative to Qrxlevmin, used in calculation of Srxlev.
Pcompensation: a power compensation value of a UE, determined according to maximum transmission power of the UE.
Qoffsettemp: a temporary offset applied to a cell, for example, when a UE is connected to the cell, a connection failure occurs.
Squal: a cell selection pilot signal quality level (dB).
Qqualmeas: a received quality measurement value (such as RSRQ) of a pilot signal of a cell.
Qqualmin: a required minimum received power level (dBm).
Qqualminoffset: an offset relative to Qqualmin, used in calculation of Squal.

### 4. Cell reselection principle

When a better cell may provide a service for the UE, the UE may reselect the better cell through a cell reselection procedure. There are many cases of cell reselection, including intra-frequency cell reselection and inter-frequency cell reselection.

For the intra-frequency cell reselection, when pilot signal strength/quality of a neighboring cell is greater than that of a current serving cell by a preset offset, and a time from a previous cell reselection exceeds 1 second, the UE hands over from the current serving cell and reselects the neighboring cell.

For inter-frequency cell reselection with the same frequency priority, when the pilot signal quality of the current serving cell is less than a preset threshold, and pilot signal quality of an inter-frequency neighboring cell is better than the signal quality of the current serving cell by a preset offset, and when the time from the previous cell reselection exceeds 1 second, the UE reselects the inter-frequency neighboring cell.

For inter-frequency cell reselection with inter-frequency different frequency priorities, there are two cases:
when the frequency priority of the current serving cell of the UE is less than the frequency priority of the inter-frequency neighboring cell, and the pilot signal quality of the neighboring cell is greater than a preset threshold, and when the time from the previous cell reselection exceeds 1 second, the UE reselects the inter-frequency neighboring cell; and
when the frequency priority of the current serving cell of the UE is greater than the frequency priority of the inter-frequency neighboring cell, and the pilot signal quality of the neighboring cell is greater than a preset threshold, when the pilot signal quality of the current serving cell is less than a preset threshold, and when the time from the previous cell reselection exceeds 1 second, the UE reselects the inter-frequency neighboring cell.

When a plurality of neighboring cells meet a condition for being a target cell, the UE may prioritize these candidate target cells according to values of the above measurements. Higher signal strength/quality corresponds to a higher priority of a corresponding candidate target cell. The UE needs to select the candidate target cell with the highest priority as the target cell.

The cell reselection method provided in this embodiment of this application is described in detail below with reference to the accompanying drawings by using some embodiments and application scenarios thereof.

When a UE camps on a vehicle mobile cell (a cell provided by a vehicle mobile IAB node) in a vehicle cabin, a neighboring cell (a cell provided by a fixed base station) of the UE changes as the vehicle moves, and the vehicle UE performs cell reselection to reselect a neighboring fixed cell (provided by a neighboring base station) with a higher priority or better pilot signal quality. When the vehicle moves away from the fixed cell, the vehicle UE reselects back the mobile cell. When the vehicle moves fast and/or a cell coverage area is small, the vehicle UE frequently performs cell reselection as the vehicle moves. However, the vehicle mobile IAB node can actually provide a best experience for the vehicle UE, and the frequent cell reselection does not provide a better experience for the vehicle UE, but degrades the experience.

In the solution of this application, for the UE camping on the vehicle mobile cell:
(1) for the inter-frequency cell reselection: the vehicle UE adjusts the priority of the frequency of the vehicle mobile cell providing a service, for example, directly as the highest priority or a predetermined priority;
(2) for the intra-frequency cell reselection: a dedicated new offset applicable to the vehicle UE (namely, a vehicle state dedicated reselection offset) is introduced, and only when the pilot quality measurement of the neighboring cell is greater than the measurement of the current cell by the offset (a positive value), the neighboring fixed cell can be reselected;
(3) for the intra- or inter-frequency cell reselection: a dedicated cell reselection hysteresis parameter for reselection from the mobile cell to the fixed cell (namely, a vehicle state dedicated cell reselection hysteresis time) is introduced, so that a time between two adjacent cell reselections is increased (an existing time is fixed to 1 second), to reduce the frequency at which the UE reselects the neighboring fixed cell.

An embodiment of this application provides a cell reselection method. FIG. 5 is a flowchart of cell reselection according to an embodiment of this application. As shown in FIG. 5, the cell reselection method provided in this embodiment of this application may include the following step 201 and step 202.

Step 201. A UE obtains a target action.

Step 202. The UE performs the target action in a case that the UE is in a vehicle state, and a cell in which the UE is located is a vehicle mobile cell.

In this embodiment of this application, the target action is any one of the following: determining a priority of a carrier frequency corresponding to the vehicle mobile cell as a target priority, and performing inter-frequency cell reselection according to the target priority; performing cell reselection based on a vehicle state dedicated reselection offset; or performing cell reselection based on a vehicle state dedicated reselection hysteresis time.

It should be noted that the UE in the vehicle state is referred to as a vehicle UE in the following.

The cell in which the UE is located can be understood as: a cell providing a camping service for the UE (namely, a serving cell) or a cell selected by the UE at the last cell selection (namely, a cell on which the UE camps).

The vehicle state dedicated reselection offset can be understood as: a dedicated reselection offset shared to the UE in the vehicle state.

The vehicle state dedicated reselection hysteresis time can be understood as: a dedicated reselection hysteresis time shared to the UE in the vehicle state.

Optionally, in this embodiment of this application, the target action is determined by any one of the following: preconfiguration, protocol agreement, predefinition, network side device configuration.

It can be understood that in a case that the UE is in the vehicle state, and the cell in which the UE is located is a vehicle mobile cell, the UE may determine to perform a specific action in any of these manners, namely, adjusting a priority of a frequency of the vehicle mobile cell to a target priority, or performing cell reselection based on the vehicle state dedicated reselection offset, or performing cell reselection based on the vehicle state dedicated reselection hysteresis time.

Optionally, in this embodiment of this application, referring to FIG. 5, as shown in FIG. 6, step 201 may be specifically implemented through step 201a and step 201b described below.

Step 201a. A network side device sends configuration information to the UE.

In this embodiment of this application, the configuration information is used for instructing the UE in the vehicle state to perform the target action. The UE performs the target action in a case that the UE is in the vehicle state, and the cell in which the UE is located is a vehicle mobile cell.

In this embodiment of this application, the network side device may be an access network device or a core network device, or the network side device may be a vehicle mobile IAB node.

Step 201b. The UE receives the configuration information sent by the network side device.

Optionally, in this embodiment of this application, the network side device is an access network device or a core network device. Step 201a may be specifically implemented through step 201a1 described below, and step 201b may be specifically implemented through step 201b1 described below.

Step 201a1. The access network device/core network device sends a Non-Access Stratum (Non-Access Stratum, NAS) message to the UE.

Step 201b1. The UE receives the NAS message sent by the access network device/core network device.

In this embodiment of this application, the NAS message includes configuration information. The configuration information is used for instructing the UE to perform the target action.

Optionally, in this embodiment of this application, the network side device is a vehicle mobile IAB node. Step 201a may be specifically implemented through step 201a2 described below, and step 201b may be specifically implemented through step 201b2 described below.

Step 201a2. The vehicle mobile IAB node sends a broadcast message to the UE.

Step 201b2. The UE receives the broadcast message sent by the vehicle mobile IAB node.

In this embodiment of this application, the broadcast message (for example, a system message) includes configuration information. The configuration information is used for instructing the UE to perform the target action.

Optionally, in this embodiment of this application, the configuration information includes at least one of the following: a target priority, a vehicle state dedicated reselection offset, and a vehicle state dedicated reselection hysteresis time.

Optionally, in this embodiment of this application, at least one of the target priority, the vehicle state dedicated reselection offset, and the vehicle state dedicated reselection hysteresis time is: preconfigured, agreed on in a protocol, predefined, or configured by a network side device.

Optionally, in this embodiment of this application, the network side device is a vehicle mobile IAB node. Step 201a may be specifically implemented through step 201a3 described below, and step 201b may be specifically implemented through step 201b3 described below.

Step 201a3. The vehicle mobile IAB node sends a specific message to the UE.

Step 201b3. The UE receives the specific message sent by the vehicle mobile IAB node.

In this embodiment of this application, the specific message (for example, specific RRC signaling) includes configuration information. The configuration information is used for instructing the UE to perform the target action.

A specific scheme for the UE to perform the target action is described below by using three implementations (namely, Implementation 1 to Implementation 3)

Optionally, in Implementation 1 of this application, the target action is determining the priority of the carrier frequency corresponding to the vehicle mobile cell as the target priority.

Optionally, in this embodiment of this application, the target priority may be a highest priority or a temporary priority.

Step 202 may be specifically implemented through the following step 202a or step 202b.

Step 202a. The UE adjusts the priority of the carrier frequency corresponding to the vehicle mobile cell to the highest priority in a case that the UE is in the vehicle state, and the cell in which the UE is located is the vehicle mobile cell.

In this embodiment of this application, the target priority is determined by any one of the following: preconfiguration, protocol agreement, predefinition, network side device configuration.

Optionally, in this embodiment of this application, the target priority may alternatively be a specific priority, or a priority greater than a preset priority, any priority, or the like, and is not limited in this embodiment of this application.

In Implementation 1, the vehicle UE may temporarily adjust the priority of the frequency of the current cell (namely, the vehicle mobile cell in which the UE is located). In other words, when the UE determines that the UE itself is in the vehicle state, and a current serving cell is in the vehicle mobile cell, the vehicle UE can adjust the priority of the carrier frequency of the current cell.
(1) A network side preconfigures or the protocol predefines that when the UE is in the vehicle state, and the current serving cell is the vehicle mobile cell, the carrier frequency of the current serving cell is temporarily set to the highest priority. The frequency priority is applicable to the vehicle mobile cell.
(2) When the network side performs configuration by using a preconfiguration message (namely, the configuration information described in the above embodiment, where the configuration information is used for instructing the UE to adjust the priority of the frequency of the vehicle mobile cell to the highest priority):
   the core network device sends this configuration to the UE by using the NAS message in a registration process initiated by the UE to the core network device; or the network side sends this configuration to the UE by using the broadcast message through which the vehicle mobile IAB node configures the current cell.

Step 202b. The UE adjusts the priority of the frequency of the vehicle mobile cell to the temporary priority in a case that the UE is in the vehicle state, and the cell in which the UE is located is the vehicle mobile cell.

In this embodiment of this application, the temporary priority is configured by specific signaling of the vehicle mobile cell, and the temporary priority is used for the inter-frequency cell reselection process when the UE camps on the vehicle mobile cell.

In this embodiment of this application, the vehicle mobile cell may configure a temporary priority value of the carrier frequency of the current cell for the vehicle UE through the specific signaling. For example, in a process that the UE determines to camp on a mobile cell, and initiates a tracking area update procedure (for example, Tracking Area Update (Track Area Update, TAU) or RAN Area Update (RAN Area Update, RAU)) by the mobile cell, the mobile cell sends the temporary priority value of the carrier frequency of the current cell to the UE.

Optionally, in this embodiment of this application, after step 202, the cell reselection method provided in this embodiment of this application may further include the following step 203.

Step 203: The UE determines the priority of the carrier frequency corresponding to the vehicle mobile cell according to a prestored frequency priority or a frequency priority received from a searched cell in a case that the UE meets a first condition.

In this embodiment of this application, the first condition includes at least one of the following: the UE camping to a fixed cell through cell reselection, signal quality of the vehicle mobile cell being less than or equal to a preset threshold, or radio link failure, radio link reestablishment, or cell reselection occurring between the UE and the vehicle mobile cell.

It can be understood that when at least one of the following cases occurs, the temporary frequency priority of the mobile cell that is determined in the mobile cell fails, and the UE determines the frequency priority of the cell in which the UE is located according to a prestored frequency priority parameter or a frequency priority configuration received from the searched cell:
(1) the vehicle UE camps to a fixed cell through the cell reselection;
(2) the signal quality of the vehicle mobile cell is less than or equal to the preset threshold, for example, RSRP of the current mobile cell is less than a preset threshold;
(3) the radio link failure, the radio link reestablishment, or the cell reselection occurs between the vehicle UE and the vehicle mobile cell.

In this embodiment of this application, when the UE camps on the vehicle mobile cell, the vehicle UE may adjust the priority of the frequency of the current cell, instead of performing cell reselection frequently as the vehicle moves. This reduces a probability that the vehicle UE camping on the vehicle mobile cell reselects the fixed cell, avoids unnecessary cell reselection of the vehicle UE, and improves quality of service of the UE.

Optionally, in Implementation 2 of this application, the target action is performing cell reselection based on the vehicle state dedicated reselection offset. Step 202 may be specifically implemented through the following step 202c.

Step 202c. The UE performs, in a case that the UE is in the vehicle state, and the cell in which the UE is located is the vehicle mobile cell, a reselection process of the neighboring cell if pilot signal strength or pilot signal quality of a neighboring cell of the vehicle mobile cell is greater than or equal to a target threshold.

In this embodiment of this application, the target threshold is determined based on the vehicle state dedicated reselection offset.

Optionally, in this embodiment of this application, the target threshold is a sum of the vehicle state dedicated reselection offset and the preset threshold.

Optionally, in this embodiment of this application, the target threshold is a sum of a first reselection offset, a vehicle state dedicated additional offset, and the preset threshold. The first reselection offset is an offset shared by UEs in the vehicle mobile cell. The vehicle state dedicated additional offset is determined by any one of the following: preconfiguration, protocol agreement, predefinition, network side device configuration.

In Implementation 2, namely, an intra-frequency cell reselection scheme:
(1) A new intra-frequency cell reselection offset applicable to the vehicle UE (namely, the vehicle state dedicated reselection offset) is introduced, and the reselection offset is used for cell reselection by the vehicle UE camping on the mobile cell. When the vehicle UE camping on the mobile cell determines that the pilot signal strength or the pilot signal quality of the neighboring cell is greater than the target threshold (namely, the sum of the vehicle state dedicated reselection offset and the preset threshold), the vehicle UE may reselect the neighboring cell.
(2) An additional intra-frequency cell reselection offset applicable to the vehicle UE (referred to as the vehicle state dedicated additional offset) is introduced. When the vehicle UE camping on the mobile cell performs cell reselection, the vehicle UE may reselect the neighboring cell if the pilot signal strength or the pilot signal quality of the neighboring cell is greater than the target threshold (namely, the sum of the first reselection offset, the vehicle state dedicated additional offset, and the preset threshold).

In this embodiment of this application, when the UE camps on the vehicle mobile cell, the vehicle UE may reselect the neighboring cell based on the pilot signal strength or the pilot signal quality of the neighboring cell of the vehicle mobile cell, and the vehicle state dedicated reselection offset, and the vehicle state dedicated reselection offset. In other words, the vehicle UE reselects the neighboring cell when the neighboring cell meets a specific condition, instead of directly performing cell reselection frequently as the vehicle moves. This reduces the probability that the vehicle UE camping on the vehicle mobile cell reselects the fixed cell, avoids unnecessary cell reselection of the vehicle UE, and improves the quality of service of the UE.

Optionally, in Implementation 3 of this application, the target action is performing cell reselection based on the vehicle state dedicated reselection hysteresis time. Step 202 may be specifically implemented through the following step 202d.

Step 202d. The UE performs, in a case that the UE is in the vehicle state, and the cell in which the UE is located is the vehicle mobile cell, a reselection process of the candidate cell if an interval between a time when the UE detects a candidate cell and the time of the previous cell reselection is greater than or equal to the vehicle state dedicated reselection hysteresis time.

In this embodiment of this application, the vehicle state dedicated reselection hysteresis time is determined by any one of the following: preconfiguration, protocol agreement, predefinition, network side device configuration.

Optionally, in this embodiment of this application, when configured by the network side device, the vehicle state dedicated reselection hysteresis time may be configured through the NAS signaling, the system message, or the dedicated RRC signaling.

In Implementation 3, namely, a hysteresis cell reselection scheme:
a mobile cell reselection hysteresis time (namely, the vehicle state dedicated reselection hysteresis time) is predefined in a protocol, or a mobile cell reselection hysteresis time is configured, for intra-frequency/inter-frequency cell reselection camping on the vehicle mobile cell. For example, when the vehicle UE performs cell reselection, it is necessary to ensure that an interval between two cell reselections is greater than the mobile cell reselection hysteresis time (for example, X seconds). As an example, X may be greater than 1 second. In other words, when a suitable candidate cell is found, and the interval from the time of the previous cell reselection exceeds X seconds, the candidate cell can be reselected.

In this embodiment of this application, when the UE camps on the vehicle mobile cell, the vehicle UE may reselect the neighboring cell based on the interval between two adjacent cell reselections and the vehicle state dedicated reselection hysteresis time. In other words, when the found suitable candidate cell meets a specific condition, the vehicle UE reselects the candidate cell, instead of directly performing cell reselection frequently as the vehicle moves. This reduces the probability that the vehicle UE camping on the vehicle mobile cell reselects the fixed cell, avoids unnecessary cell reselection of the vehicle UE, and improves the quality of service of the UE.

An embodiment of this application provides a cell reselection method. In a case that a UE is in a vehicle state, and a cell in which the UE is located is a vehicle mobile cell, the UE may perform any one of the following: determining a priority of a carrier frequency corresponding to the vehicle mobile cell as a target priority, and performing inter-frequency cell reselection according to the target priority; performing cell reselection based on a vehicle state dedicated reselection offset; or performing cell reselection based on a vehicle state dedicated reselection hysteresis time. In this solution, when the UE camps on the vehicle mobile cell, the vehicle UE may adjust the priority of the frequency of the vehicle mobile cell to the target priority, or perform cell reselection based on the vehicle state dedicated reselection offset, or perform cell reselection based on the vehicle state dedicated reselection hysteresis time, instead of directly performing cell reselection frequently as the vehicle moves. This reduces a probability that the vehicle UE camping on the vehicle mobile cell reselects a fixed cell, avoids unnecessary cell reselection of the vehicle UE, and improves quality of service of the UE.

It should be noted that the cell reselection method according to the embodiments of this application may alternatively be performed by a cell reselection apparatus, or a control module in the cell reselection apparatus configured to perform the cell reselection method.

FIG. 7 is a possible schematic structural diagram of a cell reselection apparatus according to an embodiment of this application. The apparatus is applied to a UE. As shown in FIG. 7, the cell reselection apparatus 40 may include: an obtaining module 41 and an execution module 42.

The obtaining module 41 is configured to obtain a target action. The execution module 42 is configured to perform the target action in a case that a UE is in a vehicle state, and a cell in which the UE is located is a vehicle mobile cell. The target action is any one of the following: determining a priority of a carrier frequency corresponding to the vehicle mobile cell as a target priority, and performing inter-frequency cell reselection according to the target priority; performing cell reselection based on a vehicle state dedicated reselection offset; or performing cell reselection based on a vehicle state dedicated reselection hysteresis time.

This embodiment of this application provides a cell reselection apparatus. When the UE camps on the vehicle mobile cell, the vehicle UE may adjust the priority of the frequency of the vehicle mobile cell to the target priority, or perform cell reselection based on the vehicle state dedicated reselection offset, or perform cell reselection based on the vehicle state dedicated reselection hysteresis time, instead of directly performing cell reselection frequently as the vehicle moves. This reduces a probability that the vehicle UE camping on the vehicle mobile cell reselects a fixed cell, avoids unnecessary cell reselection of the vehicle UE, and improves quality of service of the UE.

In a possible implementation, the obtaining module 41 is specifically configured to perform at least one of the following:
receiving a NAS message sent by an access network device or a core network device, where the NAS message includes configuration information;
receiving a broadcast message sent by a vehicle mobile integrated access backhaul IAB node, where the broadcast message includes configuration information; and
receiving a specific message sent by the vehicle mobile IAB node, where the specific message includes configuration information.

The configuration information is used for instructing the UE to perform the target action.

In a possible implementation, the configuration information includes at least one of the following: a target priority, a vehicle state dedicated reselection offset, and a vehicle state dedicated reselection hysteresis time.

In a possible implementation, the target priority is a highest priority.

In a possible implementation, the cell reselection apparatus 40 provided in this embodiment of this application further includes: a determining module. The determining module is configured to determine, after the execution module 42 performs the target action, in a case that the UE meets a first condition, a priority of a carrier frequency corresponding to the vehicle mobile cell according to a prestored frequency priority or a frequency priority received from a searched cell. The first condition includes at least one of the following: the UE camping to a fixed cell through cell reselection, signal quality of the vehicle mobile cell being less than or equal to a preset threshold, or radio link failure, radio link reestablishment, or cell reselection occurring between the UE and the vehicle mobile cell.

In a possible implementation, the target action is performing cell reselection based on the vehicle state dedicated reselection offset. The execution module 42 is specifically configured to perform a reselection process of a neighboring cell of the vehicle mobile cell in a case that pilot signal quality of the neighboring cell is greater than or equal to a target threshold, where the target threshold is determined according to the vehicle state dedicated reselection offset.

In a possible implementation, the target threshold is a sum of the vehicle state dedicated reselection offset and a preset threshold; or the target threshold is a sum of a first reselection offset, a vehicle state dedicated additional offset, and the preset threshold, where the first reselection offset is an offset shared by UEs in the vehicle mobile cell.

In a possible implementation, the target action is performing cell reselection based on the vehicle state dedicated reselection hysteresis time. The execution module 42 is specifically configured to perform a reselection process of a candidate cell in a case that an interval between a time when the UE detects the candidate cell and a time of a previous cell reselection is greater than or equal to the vehicle state dedicated reselection hysteresis time.

The cell reselection apparatus in this embodiment of this application may be a UE, such as a UE having an operating system, or may be a component, such as an integrated circuit or a chip, in the UE. The UE may be a terminal or another device other than the terminal. The UE may include, but is not limited to, the types of the UE 11 listed above, and the another device may be a server, a Network Attached Storage (Network Attached Storage, NAS), or the like. This is not specifically limited in the embodiments of this application.

The cell reselection apparatus provided in this embodiment of this application can implement various processes implemented by the UE in the method embodiment, and the same technical effect can be achieved. To avoid repetition, details are not described herein again.

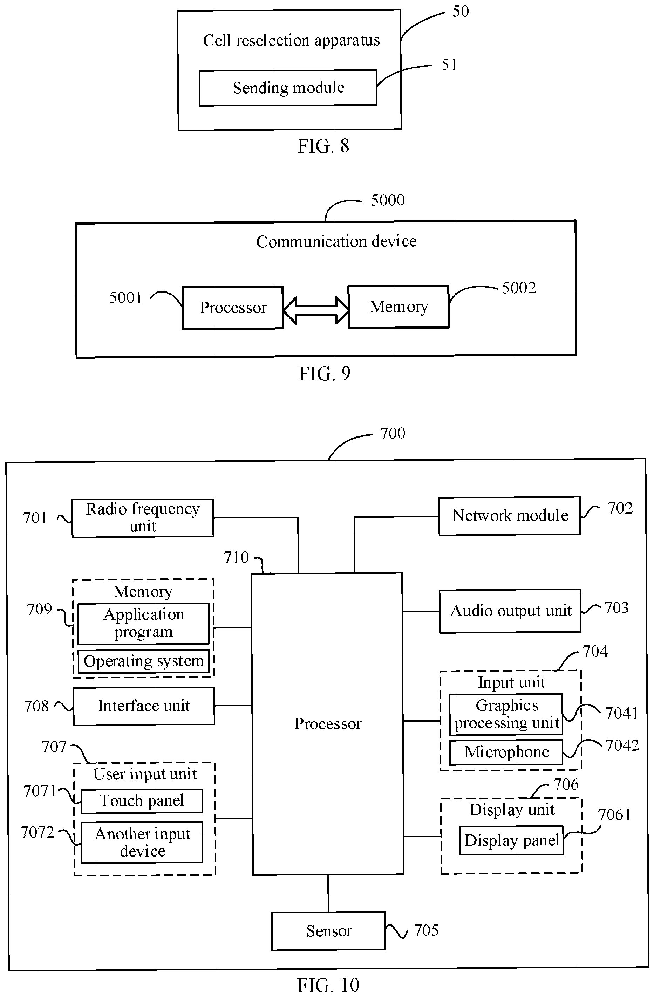

FIG. 8 is another possible schematic structural diagram of a cell reselection apparatus according to an embodiment of this application. The apparatus is applied to a network side device. As shown in FIG. 8, the cell reselection apparatus 50 may include: a sending module 51.

The sending module 51 is configured to send configuration information to a UE, where the configuration information is used for instructing the UE in a vehicle state to perform a target action. The UE performs the target action in a case that the UE is in the vehicle state, and a cell in which the UE is located is a vehicle mobile cell, and the target action is any one of the following: determining a priority of a carrier frequency corresponding to the vehicle mobile cell as a target priority, and performing inter-frequency cell reselection according to the target priority; performing cell reselection based on a vehicle state dedicated reselection offset; or performing cell reselection based on a vehicle state dedicated reselection hysteresis time.

This embodiment of this application provides a cell reselection apparatus. The cell reselection apparatus may send the configuration information to the UE, so that when the UE camps on the vehicle mobile cell, the vehicle UE may adjust the priority of the frequency of the vehicle mobile cell to the target priority, or perform cell reselection based on the vehicle state dedicated reselection offset, or perform cell reselection based on the vehicle state dedicated reselection hysteresis time, instead of directly performing cell reselection frequently as the vehicle moves. This reduces a probability that the vehicle UE camping on the vehicle mobile cell reselects a fixed cell, avoids unnecessary cell reselection of the vehicle UE, and improves quality of service of the UE.

In a possible implementation, the sending module is specifically configured to perform at least one of the following:
sending a NAS message to the UE, where the NAS message includes the configuration information, and the network side device is an access network device or a core network device;
sending a broadcast message to the UE, where the broadcast message includes configuration information, and the network side device is a vehicle mobile IAB node; and
sending a specific message to the UE, where the specific message includes configuration information, and the network side device is a vehicle mobile IAB node.

The cell reselection apparatus provided in this embodiment of this application can implement various processes implemented by the network side device in the method embodiment, and the same technical effect can be achieved. To avoid repetition, details are not described herein again.

Optionally, as shown in FIG. 9, an embodiment of this application further provides a communication device 5000, including a processor 5001 and a memory 5002. The memory 5002 has a program or an instruction stored therein and executable on the processor 5001. For example, when the communication device 5000 is a UE, when the program or the instruction is executed by the processor 5001, the steps of the UE-side method embodiment are implemented, and the same technical effect can be achieved. When the communication device 5000 is a network side device, when the program or the instruction is executed by the processor 5001, the steps of the method embodiment of the network side device are implemented, and the same technical effect can be achieved. To avoid repetition, details are not described herein again.

An embodiment of this application further provides a UE, including a processor and a communication interface. The processor is configured to perform a target action in a case that the UE is in a vehicle state, and a cell in which the UE is located is a vehicle mobile cell. The target action is any one of the following: determining a priority of a carrier frequency corresponding to the vehicle mobile cell as a target priority, and performing inter-frequency cell reselection according to the target priority; performing cell reselection based on a vehicle state dedicated reselection offset; or performing cell reselection based on a vehicle state dedicated reselection hysteresis time. The UE embodiment corresponds to the UE-side method embodiment, various implementation processes and implementations of the method embodiment are applicable to the UE embodiment, and the same technical effect can be achieved. Specifically, FIG. 10 is a schematic structural diagram of hardware of a UE according to an embodiment of this application.

The UE 700 includes, but is not limited to: at least a part of components such as a radio frequency unit 701, a network module 702, an audio output unit 703, an input unit 704, a sensor 705, a display unit 706, a user input unit 707, an interface unit 708, a memory 709, and a processor 710.

A person skilled in the art can understand that the UE 700 may further include a power supply (such as a battery) for supplying power to the components. The power supply may be logically connected to the processor 710 by a power management system, thereby implementing functions such as charging, discharging, and power consumption management by using the power management system. The structure of the UE shown in FIG. 10 does not constitute any limitation on the UE. The UE may include more or fewer components than those shown in the figure, or some components may be combined, or a different component deployment may be used. This is not described herein in detail.

It should be understood that in this embodiment of this application, the input unit 704 may include a graphics processing unit (Graphics Processing unit, GPU) 7041 and a microphone 7042. The graphics processing unit 7041 performs processing on image data of a static picture or a video that is obtained by an image acquisition apparatus (for example, a camera) in a video acquisition mode or an image acquisition mode. The display unit 706 may include a display panel 7061, and the display panel 7061 may be configured in a form such as a liquid crystal display or an organic light-emitting diode. The user input unit 707 includes at least one of a touch panel 7071 and another input device 7072. The touch panel 7071 is also referred to as a touch screen. The touch panel 7071 may include two parts: a touch detection apparatus and a touch controller. The another input device 7072 may include, but is not limited to, a physical keyboard, a functional key (such as a volume control key or a switch key), a track ball, a mouse, and a joystick, which are not described herein in detail.

In this embodiment of this application, the radio frequency unit 701 receives downlink data from a network side device and transmits the downlink data to the processor 710 for processing. In addition, the radio frequency unit 701 may transmit uplink data to the network side device. Generally, the radio frequency unit 701 includes, but is not limited to, an antenna, an amplifier, a transceiver, a coupler, a low noise amplifier, a duplexer, and the like.

The memory 709 may be configured to store a software program or an instruction and various data. The memory 709 may mainly include a first storage area for storing the program or the instruction and a second storage area for storing data. The first storage area may store an operating system, an application program or an instruction required by at least one function (for example, a sound playback function and an image display function), and the like. In addition, the memory 709 may include a volatile memory or a non-volatile memory, or the memory 709 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (Synch link DRAM, SLDRAM), and a direct rambus dynamic random access memory (Direct Rambus RAM, DR RAM). The memory 709 in this embodiment of this application includes, but is not limited to, these memories and any other suitable types of memories.

The processor 710 may include one or more processing units. Optionally, the processor 710 integrates an application processor and a modem. The application processor mainly processes operations related to an operating system, a user interface, an application, and the like. The modem mainly processes wireless communication signals, such as a baseband processor. It can be understood that, the modem may not be integrated into the processor 710.

The processor 710 is configured to perform a target action in a case that the UE is in a vehicle state and a cell in which the UE is located is a vehicle mobile cell. The target action is any one of the following: determining a priority of a carrier frequency corresponding to the vehicle mobile cell as a target priority, and performing inter-frequency cell reselection according to the target priority; performing cell reselection based on a vehicle state dedicated reselection offset; or performing cell reselection based on a vehicle state dedicated reselection hysteresis time.

This embodiment of this application provides a UE. When the UE camps on the vehicle mobile cell, the vehicle UE may adjust the priority of the frequency of the vehicle mobile cell to the target priority, or perform cell reselection based on the vehicle state dedicated reselection offset, or perform cell reselection based on the vehicle state dedicated reselection hysteresis time, instead of directly performing cell reselection frequently as the vehicle moves. This reduces a probability that the vehicle UE camping on the vehicle mobile cell reselects a fixed cell, avoids unnecessary cell reselection of the vehicle UE, and improves quality of service of the UE.

The UE provided in this embodiment of this application can implement various processes implemented by the UE in the method embodiment, and the same technical effect can be achieved. To avoid repetition, details are not described herein again.

An embodiment of this application further provides a network side device, including a processor and a communication interface. The communication interface is configured to send configuration information to a UE, where the configuration information is used for instructing the UE in a vehicle state to perform a target action. The UE performs the target action in a case that the UE is in the vehicle state, and a cell in which the UE is located is a vehicle mobile cell, and the target action is any one of the following: determining a priority of a carrier frequency corresponding to the vehicle mobile cell as a target priority, and performing inter-frequency cell reselection according to the target priority; performing cell reselection based on a vehicle state dedicated reselection offset; or performing cell reselection based on a vehicle state dedicated reselection hysteresis time. The network side device embodiment corresponds to the network side device method embodiment, and various implementation processes and implementations of the method embodiment are applicable to the network side device embodiment, and the same technical effect can be achieved.

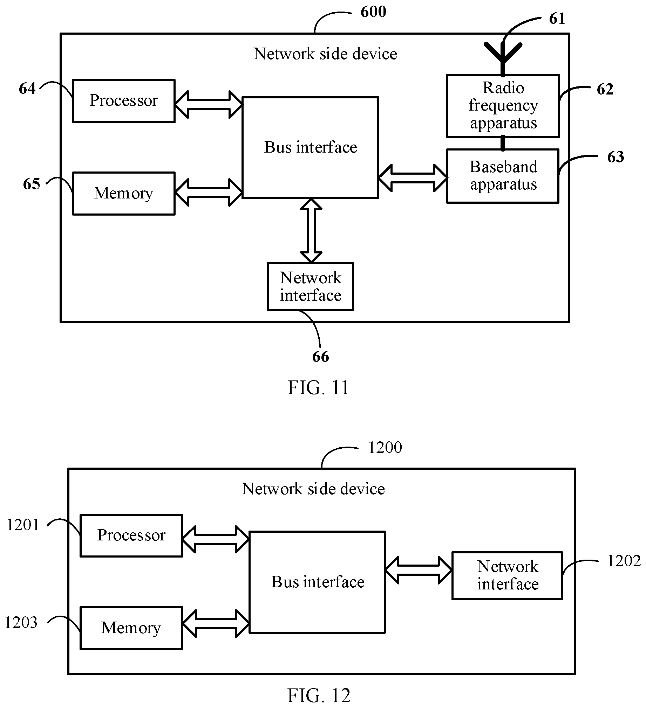

Specifically, an embodiment of this application further provides a network side device. As shown in FIG. 11, the network side device 600 includes: an antenna 61, a radio frequency apparatus 62, a baseband apparatus 63, a processor 64, and a memory 65. The antenna 61 is connected to the radio frequency apparatus 62. In an uplink direction, the radio frequency apparatus 62 receives information by the antenna 61, and sends the received information to the baseband apparatus 63 for processing. In a downlink direction, the baseband apparatus 63 processes information to be sent, and sends the information to the radio frequency apparatus 62. The radio frequency apparatus 62 processes the received information, and sends the information by the antenna 61.

The method performed by the network side device in the above embodiment may be implemented in the baseband apparatus 63. The baseband apparatus 63 includes a baseband processor.

The radio frequency apparatus 62 is configured to send configuration information to a UE, where the configuration information is used for instructing the UE in a vehicle state to perform a target action. The UE performs the target action in a case that the UE is in the vehicle state, and a cell in which the UE is located is a vehicle mobile cell, and the target action is any one of the following: determining a priority of a carrier frequency corresponding to the vehicle mobile cell as a target priority, and performing inter-frequency cell reselection according to the target priority; performing cell reselection based on a vehicle state dedicated reselection offset; or performing cell reselection based on a vehicle state dedicated reselection hysteresis time.

This embodiment of this application provides a network side device. The network side device may send the configuration information to the UE, so that when the UE camps on the vehicle mobile cell, the vehicle UE may adjust the priority of the frequency of the vehicle mobile cell to the target priority, or perform cell reselection based on the vehicle state dedicated reselection offset, or perform cell reselection based on the vehicle state dedicated reselection hysteresis time, instead of directly performing cell reselection frequently as the vehicle moves. This reduces a probability that the vehicle UE camping on the vehicle mobile cell reselects a fixed cell, avoids unnecessary cell reselection of the vehicle UE, and improves quality of service of the UE.

The network side device provided in this embodiment of this application can implement various processes implemented by the network side device in the method embodiment, and the same technical effect can be achieved. To avoid repetition, details are not described herein again.

The baseband apparatus 63 may include, for example, at least one baseband plate. A plurality of chips are disposed on the baseband plate. As shown in FIG. 11, one of the plurality of chips is, for example, the baseband processor, and is connected to the memory 65 by a bus interface, to invoke a program in the memory 65 to perform operations of the network side device in the method embodiment.

The network side device may further include a network interface 66. The interface is, for example, a common public radio interface (common public radio interface, CPRI).

Specifically, the network side device 600 in this embodiment of this application further includes: an instruction or a program stored in the memory 65 and executable on the processor 64. The processor 64 invokes the instruction or the program in the memory 65 to perform the method performed by the modules shown in FIG. 8, and the same technical effect can be achieved. To avoid repetition, details are not described herein again.

Specifically, an embodiment of this application further provides a network side device. As shown in FIG. 12, the network side device 1200 includes: a processor 1201, a network interface 1202, and a memory 1203. The network interface 1202 is, for example, a common public wireless interface.

Specifically, the network side device 1200 in this embodiment of this application further includes: an instruction or a program stored in the memory 1203 and executable on the processor 1201. The processor 1201 invokes the instruction or the program in the memory 1203 to perform the method performed by the modules shown in FIG. 8, and the same technical effect can be achieved. To avoid repetition, details are not described herein again.

An embodiment of this application further provides a readable storage medium. The readable storage medium has a program or an instruction stored therein. When the program or the instruction is executed by a processor, the processes of the method embodiment are implemented, and the same technical effect can be achieved. To avoid repetition, details are not described herein again.

The processor is the processor in the communication device in the above embodiment. The readable storage medium includes a computer-readable storage medium, such as a read-only memory ROM, a random access memory RAM, a magnetic disk, or an optical disc.

An embodiment of this application further provides a chip. The chip includes a processor and a communication interface. The communication interface is coupled to the processor. The processor is configured to execute a program or an instruction, to implement the processes of the method embodiment, and the same technical effect can be achieved. To avoid repetition, details are not described herein again.

It should be noted that, the chip mentioned in this embodiment of this application may also be referred to as a system-level chip, a system chip, a chip system, a system on chip, or the like.

An embodiment of this application further provides a computer program/program product. The computer program/program product is stored in a storage medium. The computer program/program product is executed by at least one processor to implement the processes of the method embodiment, and the same technical effect can be achieved. To avoid repetition, details are not described herein again.

An embodiment of this application further provides a communication system, including: a UE and a network side device. The UE may be configured to perform the steps of the cell reselection method described above, and the network side device may be configured to perform the steps of the cell reselection method described above.

It should be noted that the terms "include", "comprise", or any other variation thereof in this specification is intended to cover a non-exclusive inclusion, which specifies the presence of stated processes, methods, objects, or apparatuses, but do not preclude the presence or addition of one or more other processes, methods, objects, or apparatuses. Without more limitations, elements defined by the sentence "including one" does not exclude that there are still other same elements in the processes, methods, objects, or apparatuses. Moreover, it should be noted that the scope of the method and apparatus of the embodiments of this application is not limited to performing functions in the order shown or discussed, but may include performing functions in a substantially concurrent manner or in reverse order depending on the functionality involved, for example, the method described may be performed in an order different from that described, and various steps may also be added, omitted, or combined. In addition, features described with reference to some examples may be combined in other examples.

Through the descriptions of the foregoing implementations, a person skilled in the art may clearly understand that the method according to the foregoing embodiments may be implemented by using software and a necessary general hardware platform, and certainly, may alternatively be implemented by using hardware, but in many cases, the former manner is a better implementation. Based on such an understanding, the technical solution of this application essentially or the part contributing to the related art may be implemented in a form of a computer software product. The computer software product is stored in a storage medium (such as a ROM/RAM, a magnetic disk, or an optical disc) and includes several instructions for instructing a terminal (which may be a mobile phone, a computer, a server, an air conditioner, a network device, or the like) to perform the methods described in the embodiments of this application.

The embodiments of this application are described above with reference to the accompanying drawings. This application is not limited to the specific embodiments described above, and the specific embodiments described above are merely exemplary and not limitative. A person of ordinary skill in the art may make various variations under the teaching of this application without departing from the spirit of this application and the protection scope of the claims, and such variations shall all fall within the protection scope of this application.

## Claims

1. A cell reselection method, the method comprising:
performing, by a user equipment UE, a target action in a case that the UE is in a vehicle state, and a cell in which the UE is located is a vehicle mobile cell, wherein
the target action is any one of the following:
determining a priority of a carrier frequency corresponding to the vehicle mobile cell as a target priority, and performing inter-frequency cell reselection according to the target priority;
performing cell reselection based on a vehicle state dedicated reselection offset; or
performing cell reselection based on a vehicle state dedicated reselection hysteresis time.

2. The method according to claim 1, wherein before the performing, by a UE, a target action, the method further comprises at least one of the following:
receiving, by the UE, a non-access stratum NAS message sent by an access network device or a core network device, wherein the NAS message comprises configuration information;
receiving, by the UE, a broadcast message sent by a vehicle mobile integrated access backhaul IAB node, wherein the broadcast message comprises configuration information; and
receiving, by the UE, a specific message sent by the vehicle mobile IAB node, wherein the specific message comprises configuration information, wherein
the configuration information is used for instructing the UE to perform the target action.

3. The method according to claim 2, wherein the configuration information comprises at least one of the following: the target priority, the vehicle state dedicated reselection offset, and the vehicle state dedicated reselection hysteresis time.

4. The method according to any one of claims 1 to 3, wherein the target priority is a highest priority.

5. The method according to any one of claims 1 to 3, wherein after the performing, by a UE, a target action, the method further comprises:
determining, by the UE in a case that the UE meets a first condition, the priority of the carrier frequency corresponding to the vehicle mobile cell according to a prestored frequency priority or a frequency priority received from a searched cell, wherein
the first condition comprises at least one of the following: the UE camping to a fixed cell through cell reselection, signal quality of the vehicle mobile cell being less than or equal to a preset threshold, or radio link failure, radio link reestablishment, or cell reselection occurring between the UE and the vehicle mobile cell.

6. The method according to claim 1, wherein the target action is performing cell reselection based on the vehicle state dedicated reselection offset; and
the performing, by a UE, a target action comprises:
performing, by the UE, a reselection process of a neighboring cell of the vehicle mobile cell in a case that pilot signal quality of the neighboring cell is greater than or equal to a target threshold, wherein the target threshold is determined according to the vehicle state dedicated reselection offset.

7. The method according to claim 6, wherein the target threshold is a sum of the vehicle state dedicated reselection offset and a preset threshold;
or
the target threshold is a sum of a first reselection offset, a vehicle state dedicated additional offset, and the preset threshold, wherein the first reselection offset is an offset shared by UEs in the vehicle mobile cell.

8. The method according to claim 1, wherein the target action is performing cell reselection based on the vehicle state dedicated reselection hysteresis time; and
the performing, by a UE, a target action comprises:
performing, by the UE, a reselection process of a candidate cell in a case that an interval between a time when the UE detects the candidate cell and a time of a previous cell reselection is greater than or equal to the vehicle state dedicated reselection hysteresis time.

9. The method according to claim 1, wherein at least one of the target priority, the vehicle state dedicated reselection offset, and the vehicle state dedicated reselection hysteresis time is preconfigured, agreed on in a protocol, predefined, or configured by a network side device.

10. A cell reselection method, the method comprising:
sending, by a network side device, configuration information to a user equipment UE, wherein the configuration information is used for instructing the UE in a vehicle state to perform a target action, wherein
the UE performs the target action in a case that the UE is in the vehicle state, and a cell in which the UE is located is a vehicle mobile cell, and the target action is any one of the following:
determining a priority of a carrier frequency corresponding to the vehicle mobile cell as a target priority, and performing inter-frequency cell reselection according to the target priority;
performing cell reselection based on a vehicle state dedicated reselection offset; or
performing cell reselection based on a vehicle state dedicated reselection hysteresis time.

11. The method according to claim 10, wherein the sending, by a network side device, configuration information to a UE comprises at least one of the following:
sending, by the network side device, a non-access stratum NAS message to the UE, wherein the NAS message comprises the configuration information, and the network side device is an access network device or a core network device;
sending, by the network side device, a broadcast message to the UE, wherein the broadcast message comprises the configuration information, and the network side device is a vehicle mobile integrated access backhaul IAB node; and
sending, by the network side device, a specific message to the UE, wherein the specific message comprises the configuration information, and the network side device is a vehicle mobile IAB node.

12. A cell reselection apparatus, the apparatus comprising: an obtaining module and an execution module, wherein
the obtaining module is configured to obtain a target action; and
the execution module is configured to perform the target action in a case that a user equipment UE is in a vehicle state, and a cell in which the UE is located is a vehicle mobile cell, wherein
the target action is any one of the following:
determining a priority of a carrier frequency corresponding to the vehicle mobile cell as a target priority, and performing inter-frequency cell reselection according to the target priority;
performing cell reselection based on a vehicle state dedicated reselection offset; or
performing cell reselection based on a vehicle state dedicated reselection hysteresis time.

13. The apparatus according to claim 12, wherein the obtaining module is specifically configured to perform at least one of the following:
receiving a non-access stratum NAS message sent by an access network device or a core network device, wherein the NAS message comprises configuration information;
receiving a broadcast message sent by a vehicle mobile integrated access backhaul IAB node, wherein the broadcast message comprises configuration information; and
receiving a specific message sent by the vehicle mobile IAB node, wherein the specific message comprises configuration information, wherein
the configuration information is used for instructing the UE to perform the target action.

14. The apparatus according to claim 13, wherein the configuration information comprises at least one of the following: the target priority, the vehicle state dedicated reselection offset, and the vehicle state dedicated reselection hysteresis time.

15. The apparatus according to any one of claims 12 to 14, wherein the target priority is a highest priority.

16. The apparatus according to any one of claims 12 to 14, wherein the apparatus further comprises: a determining module, wherein
the determining module is configured to determine, after the execution module performs the target action, in a case that the UE meets a first condition, a priority of a carrier frequency corresponding to the vehicle mobile cell according to a prestored frequency priority or a frequency priority received from a searched cell, wherein
the first condition comprises at least one of the following: the UE camping to a fixed cell through cell reselection, signal quality of the vehicle mobile cell being less than or equal to a preset threshold, or radio link failure, radio link reestablishment, or cell reselection occurring between the UE and the vehicle mobile cell.

17. The apparatus according to claim 12, wherein the target action is performing cell reselection based on the vehicle state dedicated reselection offset; and
the execution module is specifically configured to perform a reselection process of a neighboring cell of the vehicle mobile cell in a case that pilot signal quality of the neighboring cell is greater than or equal to a target threshold, wherein the target threshold is determined according to the vehicle state dedicated reselection offset.

18. The apparatus according to claim 17, wherein the target threshold is a sum of the vehicle state dedicated reselection offset and a preset threshold;
or
the target threshold is a sum of a first reselection offset, a vehicle state dedicated additional offset, and the preset threshold, wherein the first reselection offset is an offset shared by UEs in the vehicle mobile cell.

19. The apparatus according to claim 12, wherein the target action is performing cell reselection based on the vehicle state dedicated reselection hysteresis time; and
the execution module is specifically configured to perform a reselection process of a candidate cell in a case that an interval between a time when the UE detects the candidate cell and a time of a previous cell reselection is greater than or equal to the vehicle state dedicated reselection hysteresis time.

20. The apparatus according to claim 12, wherein at least one of the target priority, the vehicle state dedicated reselection offset, and the vehicle state dedicated reselection hysteresis time is preconfigured, agreed on in a protocol, predefined, or configured by a network side device.

21. A cell reselection apparatus, applied to a network side device, the apparatus comprising: a sending module, wherein
the sending module is configured to send configuration information to a user equipment UE, wherein the configuration information is used for instructing the UE in a vehicle state to perform a target action, wherein
the UE performs the target action in a case that the UE is in the vehicle state, and a cell in which the UE is located is a vehicle mobile cell, and the target action is any one of the following:
determining a priority of a carrier frequency corresponding to the vehicle mobile cell as a target priority, and performing inter-frequency cell reselection according to the target priority;
performing cell reselection based on a vehicle state dedicated reselection offset; or
performing cell reselection based on a vehicle state dedicated reselection hysteresis time.

22. The apparatus according to claim 21, wherein the sending module is specifically configured to perform at least one of the following:
sending a non-access stratum NAS message, wherein the NAS message comprises the configuration information, and the network side device is an access network device or a core network device;
sending a broadcast message to the UE, wherein the broadcast message comprises the configuration information, and the network side device is a vehicle mobile integrated access backhaul IAB node; and
sending a specific message to the UE, wherein the specific message comprises the configuration information, and the network side device is a vehicle mobile IAB node.

23. A user equipment UE, comprising a processor, a memory, and a program or an instruction stored in the memory and executable on the processor, wherein when the program or the instruction is executed by the processor, the steps of the cell reselection method according to any one of claims 1 to 9 are implemented.

24. A network side device, comprising a processor, a memory, and a program or an instruction stored in the memory and executable on the processor, wherein when the program or the instruction is executed by the processor, the steps of the cell reselection method according to claim 10 or 11 are implemented.

25. A communication system, the communication system comprising the cell reselection apparatus according to any one of claims 12 to 20 and the cell reselection apparatus according to claim 21 or 22; or
the communication system comprising the user equipment UE according to claim 23 and the network side device according to claim 24.

26. A readable storage medium, the readable storage medium having a program or an instruction stored therein, wherein when the program or the instruction is executed by a processor, the steps of the cell reselection method according to any one of claims 1 to 9 are implemented, or the steps of the cell reselection method according to claim 10 or 11 are implemented.

27. A computer program product, wherein the computer program product is executed by at least one processor to implement the cell reselection method according to any one of claims 1 to 9, or implement the cell reselection method according to claim 10 or 11.

28. A chip, the chip comprising a processor and a communication interface, wherein the communication interface is coupled to the processor, and the processor is configured to execute a program or an instruction, to implement the cell reselection method according to any one of claims 1 to 9, or implement the cell reselection method according to claim 10 or 11.
